(19) Europäisches Patentamt
European Patent Office
Office européen des brevets

(11) **EP 3 096 510 A1**

(12) **EUROPEAN PATENT APPLICATION**

(43) Date of publication:
**23.11.2016 Bulletin 2016/47**

(51) Int Cl.:
***H04N 1/60*** (2006.01)

(21) Application number: **15305743.5**

(22) Date of filing: **18.05.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Thomson Licensing
92130 Issy-les-Moulineaux (FR)**

(72) Inventors:
• **Francois, Edouard
35576 Cesson Sevigne (FR)**
• **Lopez, Patrick
35576 Cesson Sevigne (FR)**
• **Lasserre, Sebastien
35576 Cesson Sevigne (FR)**

(74) Representative: **Perrot, Sébastien
TECHNICOLOR
1-5, rue Jeanne d'Arc
92130 Issy-les-Moulineaux (FR)**

(54) **METHOD AND DEVICE FOR PROCESSING COLOR IMAGE DATA REPRESENTING COLORS OF A COLOR GAMUT**

(57)    The present disclosure generally relates to a method and device for pre- or post-processing color image data by applying either a color gamut mapping or an inverse color gamut mapping.

The principle of the color gamut mapping, according to an embodiment of the disclosure, is to define a 'preserved color gamut' (PCG) inside a target color gamut (TCG). Next, any color image data representing a color of this PCG is then not modified by the color gamut mapping and any color image data representing a color located outside the PCG is then processed (shrunk) such that the mapped color image data represents a color of the TCG.

The disclosure relates also to a method and device for encoding/decoding color image data.

**Fig. 5**

**Description**

1. **Field.**

The present disclosure generally relates to color gamut mapping.

2. **Background.**

The present section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

In the following, a picture contains one or several arrays of color image data in a specific picture/video format which specifies all information relative to the pixel values of a picture (or a video) and all information which may be used by a display and/or any other device to visualize and/or decode a picture (or video) for example. A picture comprises at least one component, in the shape of a first array of color image data, usually a luma (or luminance) component, and, possibly, at least one other component, in the shape of at least one other array of color image data, usually a color component. Or, equivalently, the same information may also be represented by a set of arrays of color image data, such as the traditional tri-chromatic RGB representation.

A color image data is represented by a vector of **C** values, where **C** is the number of components. Each value of a vector is represented with a number of bits which is linked to the maximal dynamic range of the color image data.

A dynamic range is defined as the ratio between the minimum and maximum luminance of picture/video signal. The luminance (or brightness) is commonly measured in candela per square meter ($cd/m^2$) or nits and corresponds to the luminous intensity per unit area of light travelling in a given direction. Dynamic range is also measured in terms of 'f-stop', where one f-stop corresponds to a doubling of the signal dynamic range. High Dynamic Range (HDR) generally corresponds to more than 16 f-stops. Levels in between 10 and 16 f-stops are considered as 'Intermediate' or 'Extended' dynamic range (EDR).

Current video distribution environments provide Standard Dynamic Range (SDR), typically supporting a range of brightness (or luminance) of around 0.1 to 100 $cd/m^2$, leading to less than 10 f-stops. The intent of HDR color image data is therefore to offer a wider dynamic range, closer to the capacities of the human vision.

Another aspect for a more realistic experience is the color dimension, which is conventionally defined by a color gamut. A color gamut is a certain set of colors. The most common usage refers to a set of colors which can be accurately represented in a given circumstance, such as within a given color space or by a certain output device.

A color gamut is defined by its color primaries and its white point.

Since the human eye has three types of color sensors that respond to different ranges of wavelengths, a full plot of all visible colors is a three-dimensional figure. However, the concept of color can be divided into two parts: brightness and chromaticity. For example, the color white is a bright color, while the color grey is considered to be a less bright version of that same white. In other words, the chromaticity of white and grey are the same while their brightness differs.

The CIE XYZ color space was deliberately designed so that the Y parameter was a measure of the brightness or luminance of a color. The chromaticity of a color was then specified by the two derived parameters x and y, two of the three normalized values which are functions of all three tristimulus values $X$, $Y$, and $Z$:

$$x = \frac{X}{X + Y + Z}$$

$$y = \frac{Y}{X + Y + Z}$$

$$z = \frac{Z}{X + Y + Z} = 1 - x - y$$

The derived color space specified by x, y, and Y is known as the **CIE xyY** color space and is widely used to specify colors in practice.

The X and Z tristimulus values can be calculated back from the chromaticity values *x* and *y* and the *Y* tristimulus value:

$$X = \frac{Y}{y} x$$

$$Z = \frac{Y}{y}(1 - x - y)$$

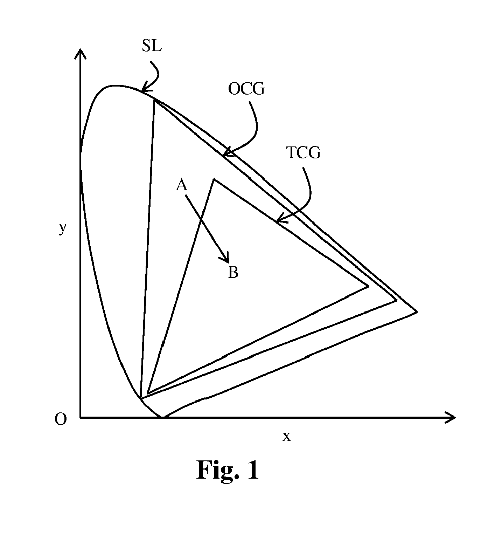

**Fig. 1** shows a CIE 1931 xy chromaticity diagram obtained as explained above.

The outer curved boundary SL is the so-called *spectral locus,* (delimited by the tongue-shaped or horseshoe-shaped area), representing the limits of the natural colors.

Note that a chromaticity diagram is a tool to specify how the human eye will experience light with a given spectrum. It cannot specify colors of objects (or printing inks), since the chromaticity observed while looking at an object depends on the light source as well.

It is usual that a representation of a color gamut in a chromaticity diagram is delimited by a polygon joining the color primaries defined in a chromaticity diagram. The polygon is usually a triangle because the color gamut is usually defined by three color primaries, each represented by a vertex of this triangle.

**Fig. 1** depicts a representation of an Original Color Gamut (OCG), and a representation of a Target Color Gamut (TCG) in the CIE 1931 xy chromaticity diagram (M. Pedzisz (2014). Beyond BT.709, SMPTE Motion Imaging Journal, vol. 123, no. 8, pp 18-25).

For example, the OCG corresponds to the BT.2020 color gamut, compatible with incoming UHDTV devices, while the TCG corresponds to the BT.709 color gamut compatible with existing HDTV devices. Such a TCG is usually said the Standard Color Gamut (SCG). As illustrated by **Fig. 1**, each color of a color gamut, here OCG, and thus each color image data representing a color of this color gamut, is represented by a 2D point A in this chromaticity diagram, and mapping a color of the OCG to a color of a different target color gamut TCG involves moving the 2D point A to a 2D point B representing a color of the TCG.

For example, mapping colors of the standard color gamut, typically BT.709, to the colors of a wider color gamut, typically BT. 2020, aims to provide, to the end-user, colors closer to real life, as the BT.2020 triangle comprises more natural colors than the BT.709 triangle.

Distributing OCG color image data, i.e. color image data representing a color of an OCG, involves the problem of backward compatibility with legacy devices which support only SCG color image data, i.e. color image data representing a color of a SCG. This is the so-called problem of color gamut incompatibility.

More precisely, distributing OCG color image data involves the coexistence in a same stream of an OCG, e.g. BT.2020, version of the color image data and a SCG, e.g. BT.709, version of those color image data.

This requires at some point a color gamut mapping from a first color gamut to a second color gamut should be performed without destroying the ability to restore the first color gamut version of the color image data from the second color gamut version of said color image data, i.e. in simple words, an invertible color gamut mapping.

### 3. Summary.

The following presents a simplified summary of the disclosure in order to provide a basic understanding of some aspects of the disclosure. This summary is not an extensive overview of the disclosure. It is not intended to identify key or critical elements of the disclosure. The following summary merely presents some aspects of the disclosure in a simplified form as a prelude to the more detailed description provided below.

The disclosure sets out to remedy at least one of the drawbacks of the prior art with a method for processing color image data representing colors of an original color gamut. The method comprises a color gamut mapping in the course of which each of the color image data, represented by a first 2D point belonging to a representation of the original color gamut in a chromaticity diagram, is mapped to a mapped color image data of a target color gamut, the mapped color image data of the target color gamut being represented by a second 2D point belonging to a representation of the target color gamut in the chromaticity diagram, wherein the color gamut mapping comprises:

- obtaining a first scaling factor and a second scaling factor of an homothety, said first scaling factor being greater than one and being used to define a representation of an intermediate color gamut in the chromaticity diagram by applying the homothety from the representation of the target color gamut, said second scaling factor being lower than one and being used to define a representation of a preserved color gamut in the chromaticity diagram by applying the homothety the representation of the target color gamut;
- when said first 2D point is located outside the representation of the preserved color gamut, moving said first 2D point so that it belongs to the representation of the target color gamut, the second 2D point being then equal to the moved first 2D point.

According to an embodiment, the center of the homothety is either the white point of the target color gamut or the centroïd of the representation of the target color gamut in the chromaticity diagram.

According to ab embodiment, moving a first 2D point so that it belongs to the representation of the target color gamut uses a monotonic increasing function.

According to an embodiment, the monotonic increasing function is defined in order that each mapped color image data corresponds to at most one color image data.

According to an embodiment, the second 2D point (B) is obtained as follows:

$$O_S B / O_S W = \rho 1(O_S A / O_S W)$$

where B is the second 2D point, W is a 2D point obtained by projecting said first 2D point on a border of the representation of the intermediate color gamut in the chromaticity diagram, $f_W$ being the first scaling factor, and $\rho 1(.)$ the monotonic increasing function satisfying the following conditions:

$$\rho 1(1) = 1 / f_W$$

$$\rho 1( f_P / f_W) = f_P / f_W$$

where $f_p$ is the second scaling factor.

According to an embodiment, the second 2D point (B) is obtained as follows:

$$O_S B / O_S S' = \rho 2(O_S A / O_S S')$$

where B is the second 2D point and $\rho 2(.)$ the monotonic increasing function satisfying the following conditions:

$$\rho 2(f_W) = 1$$

$$\rho 2( f_P) = f_P$$

where $f_p$ is the second scaling factor and $f_W$ is the first scaling factor.

According to an embodiment, the second 2D point (B) is obtained as follows:

$$O_S B / O_S P'' = \rho 3(O_S A / O_S P'')$$

where B is the second 2D point and $\rho 3(.)$ the monotonic increasing function satisfying the following conditions:

$$\rho 3(f_W / f_P) = 1 / f_P$$

$$\rho 3(1) = 1$$

where $f_p$ is the second scaling factor and $f_W$ is the first scaling factor.

According to an embodiment, the colors of the color gamut that do not belong to the representation of the intermediate color gamut are clipped in order to belong to a border of the representation of the target color gamut

According to an embodiment, the monotonic increasing function is signalled by an information data in a stream.

According to another of its aspects, the present disclosure relates to a method for processing color image data representing colors of an original color gamut. The method comprises an inverse color gamut mapping in the course of which mapped color image data, represented by a second 2D point belonging to a representation of a target color gamut in a chromaticity diagram, is inverse mapped to said color image data, the inverse mapped color data of the original color gamut being represented by a first 2D point belonging to a representation of the original color gamut in the chromaticity diagram, wherein said inverse color gamut mapping comprises:

- obtaining a first scaling factor and a second scaling factor of an homothety, said first scaling factor being greater than one and being used to define a representation of an intermediate color gamut in the chromaticity diagram by applying the homothety from the representation of the target color gamut, said second scaling factor being lower than one and being used to define a representation of a preserved color gamut in the chromaticity diagram by applying the homothety the representation of the target color gamut;
- when said second 2D point is located outside the representation of the preserved color gamut in the chromaticity diagram, moving (900) said second 2D point so that it belongs to the representation of the intermediate color gamut.

According to an embodiment, the center of the homothety is either the white point of the target color gamut or the centroïd of the representation of the target color gamut in the chromaticity diagram.

According to an embodiment, moving a second 2D point so that it belongs to the representation of the intermediate color gamut (ICG) uses a monotonic increasing function.

According to an embodiment, the monotonic increasing function is signalled by an information data in a stream.

According to another of its aspects, the present disclosure relates to a method for encoding color image data, characterized in that the color image data are pre-processed according to a method explained above.

According to another of its aspects, the present disclosure relates to a method for decoding color image data, characterized in that the decoded color image data are post-processed according to a method explained above.

According to other of its aspects, the disclosure relates to a device comprising a processor configured to implement one of the above methods, a computer program product comprising program code instructions to execute the steps of one of the above method when this program is executed on a computer, a processor readable medium having stored therein instructions for causing a processor to perform at least the steps of one of the above method, and a non-transitory storage medium carrying instructions of program code for executing steps of one of the above method when said program is executed on a computing device.

The specific nature of the disclosure as well as other objects, advantages, features and uses of the disclosure will become evident from the following description of embodiments taken in conjunction with the accompanying drawings.

**4. Brief Description of Drawings.**

In the drawings, an embodiment of the present disclosure is illustrated. It shows:

- **Fig. 1** depicts some example of color gamuts represented in the CIE 1931 xy chromaticity diagram;
- **Fig. 2** shows a block diagram of the steps of a color gamut mapping in accordance with an embodiment of the disclosure;
- **Fig. 3** shows examples of OCG, PCG and TCG represented in the CIE 1931 xy chromaticity diagram.
- **Figs. 4a-b** show an embodiment of the step 300 of the method;
- **Fig. 5** depicts an example of an intermediate color gamut in according with an embodiment of the disclosure;
- **Figs. 6a-b** show an embodiment of the step 300 of the method;
- **Figs. 7a-b** show an embodiment of the step 300 of the method;
- **Fig. 8** illustrates a clipping of a color when the color gamuts are represented in a chromaticity diagram in accordance with an embodiment of the disclosure;
- **Fig. 9** shows a block diagram of the steps of an inverse color gamut mapping in accordance with an embodiment of the disclosure;
- **Fig. 10** shows an example of an architecture of a device in accordance with an embodiment of the disclosure;

- **Fig. 11** shows two remote devices communicating over a communication network in accordance with an embodiment of the disclosure; and
- **Fig. 12** shows an example of SEI message syntax that can be conveyed as metadata with a stream and that embeds parameters useful to perform the inverse color gamut mapping.

Similar or same elements are referenced with the same reference numbers.

## 6. Description of Embodiments.

The present disclosure will be described more fully hereinafter with reference to the accompanying figures, in which embodiments of the disclosure are shown. This disclosure may, however, be embodied in many alternate forms and should not be construed as limited to the embodiments set forth herein. Accordingly, while the disclosure is susceptible to various modifications and alternative forms, specific embodiments thereof are shown by way of example in the drawings and will herein be described in detail. It should be understood, however, that there is no intent to limit the disclosure to the particular forms disclosed, but on the contrary, the disclosure is to cover all modifications, equivalents, and alternatives falling within the spirit and scope of the disclosure as defined by the claims.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the disclosure.

Although some of the diagrams include arrows on communication paths to show a primary direction of communication, it is to be understood that communication may occur in the opposite direction to the depicted arrows.

Some embodiments are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "one embodiment" or "an embodiment" means that a particular feature, structure, or characteristic described in connection with the embodiment can be included in at least one implementation of the disclosure. The appearances of the phrase "in one embodiment" or "according to an embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

While not explicitly described, the present embodiments and variants may be employed in any combination or sub-combination.

The disclosure is described for encoding/decoding color image data and thus extends to the encoding/decoding of a picture because the color image data represents the pixels values, and to sequence of pictures (video) because each picture of the sequence is sequentially encoded/decoded.

Moreover, the color image data are considered as expressed in a 2D xyY color space (or any other equivalent 2D color space). Consequently, when the color image data are expressed in another color space, for instance in an RGB color space, or in the CIE 1931 XYZ color space, or a differential coding color space such as YCbCr or YDzDx, conversion processes are applied to these color data.

In the following, the following rules for notations are applied:

- the coordinates of a vector or a point in a 3D RGB color space are written in small font. For instance, $(r_k, g_k, b_k)$ corresponds to the three coordinates of a color sample K in a 3D RGB color space.

- In the 3D XYZ color space, caps font is used to keep the distinction with the 2D xyY color space where small font is used. For instance, $(X_k,Y_k,Z_k)$ are the coordinates of a color sample K in the 3D XYZ color space.
- In the 2D xyY color space, small font is used. For instance, $(x_A,y_A)$ are the coordinates of the 2D point A in the 2D xyY color space.
- The Red, Green or Blue color primaries in a color space are written in caps font. For instance, red primary in the 3D RGB color space of an original color gamut OCG is written $R_O$.
- a vector linking two 2D points A and B in the 2D xyY color space is noted AB.
- the distance between two 2D points A and B is noted |AB|.
- the line passing through 2D points A and B is noted (AB)
- the symbol or 'x' are used for the scalar multiplication.

In the following, the tristimulus (r,g,b), expressed in the 3D RGB color space of the OCG are used. Conversion of this tristimulus into 2D xyY coordinates system applies to represent the coordinates of a 2D point in the chromaticity diagram. Such tristimulus refer to a 3D RGB color space but the (r,g,b) tristimulus may also refer to tristimulus if any other color space, such as XYZ, YCbCr, YDzDx for example. In the following, for a given color sample co, its coordinates $(r_{co},g_{co},b_{co})$ in the 3D RGB color space of the OCG as well as the coordinates $(x_{co},y_{co})$ in the 2D xyY color space may be used, depending on the considered process applied to the color sample co.

Note that a 3D RGB color space depends on the color primaries and white point. Hence, there is one 3D RGB color space of the OCG or one 3D RGB color space of a target color gamut (TCG). On the contrary the XYZ color space is universal: it does not depend on color primaries or white point. A color sample co has different coordinate values in these different color spaces. Converting coordinate values from one 3D RGB color space (e.g. 3D RGB color space of the OCG) to another 3D RGB color space (e.g. 3D RGB color space of a preserved color gamut (PCG)) generally involves multiplication by 3x3 matrices.

According to an exemplary embodiment, the disclosure relates to a method for processing color image data representing colors of an original color gamut OCG. The method comprises a color gamut mapping in the course of which each color image data CID to be mapped is represented by a first 2D point A belonging to a representation of the OCG in a chromaticity diagram. Said color image data is then mapped to a mapped color image data MCID representing a color of a target color gamut TCG, each color of said TCG being represented by a second 2D point B belonging to a representation of said TCG in the chromaticity diagram.

As mentioned before, one of the advantages of the disclosure is to provide a color gamut mapping that can be invertible and as far as possible of limited complexity to be implementable on hardware or FPGA platforms used for instance in Set-top-boxes or blu-ray players for example. In addition it has to preserve as much as possible the color in the Target Color Gamut (TCG).

The principle of the color gamut mapping, according to an embodiment of the disclosure, is to define an homothetic 'preserved color gamut' (PCG) inside the TCG, that is typically the Standard Color Gamut (SCG). Next, any color image data representing a color of this PCG is then not modified by the color gamut mapping and any color image data representing a color located outside the PCG is then processed (shrunk) as explained below such that the mapped color image data MCID represents a color of the TCG.

A homothety is a transformation of an affine space determined by a point called its centre (or centroïd) and a nonzero number called a scaling factor (or ratio).

According to an embodiment of the disclosure, the CIE 1931 xyY chromaticity diagram is used. However, the disclosure extends to any other chromaticity diagram such as CIE Luv (2D coordinate systems define by u and v components), or CIE Lab (2D coordinate systems define by a and b components).

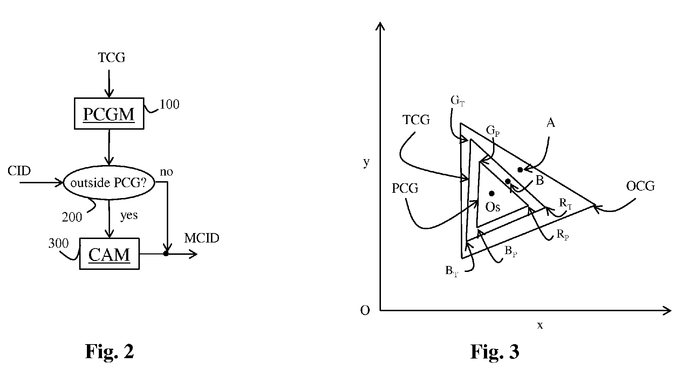

**Fig. 2** shows a block diagram of the steps of a color gamut mapping in accordance with an embodiment of the disclosure.

In step 100, a module PCGM obtains a scaling factor $f_W$ and a scaling factor $f_p$ of an homothety H. The scaling factor $f_W$ is greater than one and is used to define a representation of an intermediate color gamut ICG in the chromaticity diagram by applying the homothety H with the scaling factor $f_W$ on the representation of the target color gamut TCG. The scaling factor $f_P$ is lower than one and is used to define a representation of a preserved color gamut (PCG) in the chromaticity diagram by applying the homothety H with the scaling factor $f_P$ on the representation of the target color gamut TCG.

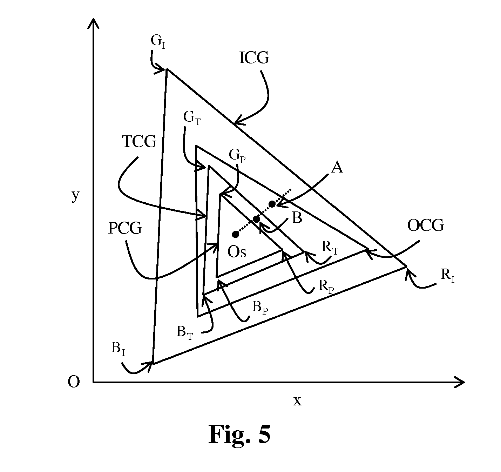

The ICG, PCG and TCG are thus homothetic as illustrated in **Fig. 5**.

**Fig. 3** shows examples of OCG, PCG and TCG represented in the CIE 1931 xy chromaticity diagram.

Each color gamut is represented, here, by a triangle whose vertices, defined as 2D points in the chromaticity diagram, represent the three color primaries defining said color gamuts. Note the white point, also used to define each color gamut, is also represented by a 2D point in the chromaticity diagram but this 2D point is not shown in **Fig. 3**.

When the CIE 1931 xy chromaticity diagram is considered, in step 100, the triangle representing the PCG in the chromaticity diagram is obtained from the representation of the TCG by:

$$O_S R_P = f_P \cdot O_S R_T \qquad O_S G_P = f_P \cdot O_S G_T \qquad O_S B_P = f_P \cdot O_S B_T$$

where $R_P$, $G_P$, $B_P$ are three 2D points representing the three color primaries defining the PCG in the chromaticity diagram and $O_S$ is the center of the homothety H. The process would apply similarly in any other color space such as CIE Lab (using the ab 2D coordinates system) or CIE Luv (using the uv 2D coordinates system).

According to an embodiment, the center $O_S$ of the homothety H is the centroïd of the representation of the TCG in the chromaticity diagram given for example by:

$$OO_S = OR_T + OG_T + OB_T$$

with O is the origin of the chromaticity diagram.

According to an embodiment, the center $O_S$ of the homothety H is the white point $WP_T$ of the TCG.

In step 200 of **Fig. 2,** a module checks whether each first 2D point A is located outside the representation of the PCG in the chromaticity diagram.

In step 300, when a first 2D point A is located outside the representation of the PCG, a module CAM moves (shrinks) the first 2D point A so that it is inside the representation of the TCG.

The second 2D point B representing the mapped color image data in the chromaticity diagram is then equal to the moved first 2D point A.

**Fig. 3** illustrates the color gamut mapping described in relation with **Fig. 2** when the color gamuts are represented in the CIE 1931 chromaticity diagram.

A 2D point A represents, in the xyY chromaticity diagram, a color image data to be mapped. Here, the first 2D point A is located outside the triangle representing the PCG in the chromaticity diagram. Then, the first 2D point A is shrunk to belong to the triangle representing the TCG in the chromaticity diagram. The moved 2D point is a second 2D point B that represents colors included in the TCG relative to the mapped color image data.

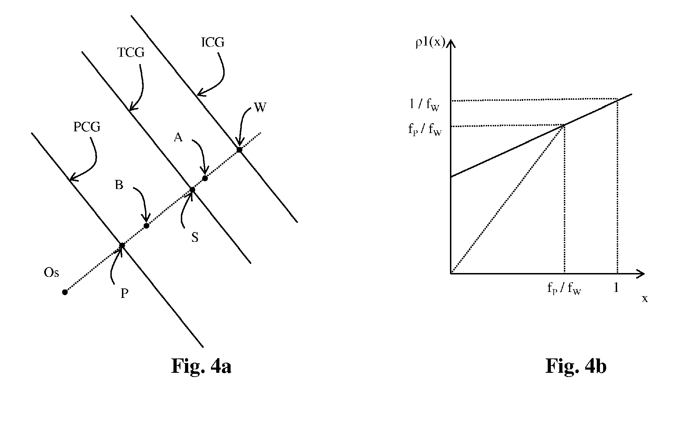

According to an embodiment of step 300, illustrated in **Figs. 4a-b**, the first 2D point A is moved (shrunk) so that it belongs to the representation of the TCG as follows:

The first 2D point A is projected onto an intersection point W located on a border of a representation of an intermediate color gamut ICG, said ICG being defined by applying on a representation of the TCG the homothety H with a scaling factor $f_W$ strictly greater than 1.

A representation of the ICG in the chromaticity diagram (i.e. the color primaries $R_I$, $G_I$, $B_I$ defining the ICG in the chromaticity diagram) is (are) obtained by applying on a representation of a Target Color Gamut TCG (on the color primaries of TCG) an homothety H with the scaling factor $f_W$.

According to an embodiment, an information data INFOICG, that defines the border of representation of the ICG to be used, is obtained.

According to an embodiment, said information data INFOICG defines the representation of ICG and the border of the representation of the ICG is defined as follows: A border of the representation of the ICG is schematically represented by a line segment defined by two 2D points $P_1$ and $P_2$ representing two ICG color primaries in the chromaticity diagram. The position of the first 2D point A in the representation of the ICG in the chromaticity diagram is given by the weighted centroid definition:

$$O_S A = a \cdot O_S R_I + b \cdot O_S G_I + c \cdot O_S B_I \qquad \text{with } c = 1 - a - b$$

where **a, b,** and **c** are weighting parameters, $R_I(x_{RI}, y_{RI})$, $G_I(x_{GI}, y_{GI})$ and $B_I(x_{BI}, y_{BI})$ are the three 2D points representing the three color primaries defining the ICG in the chromaticity diagram (**Fig. 5**).

This previous equation, expressed for the 2 coordinates x and y, gives the following 2 equations:

$$(x_A - x_{Os}) = a \cdot (x_{RI} - x_{Os}) + b \cdot (x_{GI} - x_{Os}) + (1 - a - b) \cdot (x_{BI} - x_{Os})$$

$$(y_A - y_{Os}) = a \cdot (y_{RI} - y_{Os}) + b \cdot (y_{GI} - y_{Os}) + (1 - a - b) \cdot (y_{BI} - y_{Os})$$

which leads to the following system, with a and b and unknown parameters:

$$(x_{RI} - x_{BI}) \cdot a + (x_{GI} - x_{BI}) \cdot b = (x_A - x_{BI})$$

$$(y_{RI} - y_{BI}) \cdot a + (y_{GI} - y_{BI}) \cdot b = (y_A - y_{BI})$$

Identifying **a** and **b** consists in solving this system of 2 equations with 2 unknowns.

Using the white point $WP_T$ of the TCG instead of the centroid $O_S$ would just consist in replacing in those equations $O_S$ by $WP_T$.

The border of the representation of the ICG to which the 2D intersection point W belongs is then determined according to the values of the parameters **a, b** and **c** as follows:

- If the value of parameter **a** is the minimum value (compared to the value of **b** and **c,** then the 2D intersection point W is located on the border of the representation of the ICG defined by $P_1=G_1$ and $P_2=B_I$;
- If the value of parameter **b** is the minimum value (compared to the value of **a** and **c,** then the 2D intersection point W is located on the border of the representation of the ICG defined by $P_1=R_I$ and $P_2=B_I$;
- If the value of parameter **c** is the minimum value (compared to the value of **a** and **b,** then the 2D intersection point W is located on the border of the representation of the ICG defined by $P_1=R_I$ and $P_2=G_I$

Once the border of the representation of the ICG has been determined, the position of the 2D intersection point W on this border (defined by the points $P_1$ and $P_2$) that corresponds to the intersection of line $(O_SA)$ with the segment linking $P_1$ and $P_2$ is given by:

$$O_S W = \lambda \cdot O_S P_1 + (1 - \lambda) \cdot O_S P_2 \qquad (1)$$

where $\lambda$ is a parameter value to be determined.

Moreover, the 2D intersection point W belongs to the line joining the 2D point A and the centroid $O_S$, i.e.

$$O_S W = \mu \cdot O_S A \qquad (2)$$

where $\mu$ is a real value to be defined that is greater than 1.

Replacing $O_S W$ in equation (2) leads to:

$$\lambda \cdot O_S P_1 + (1 - \lambda) \cdot O_S P_2 = \mu \cdot O_S A$$

that is

$$\lambda \cdot P_1 P_2 + \mu \cdot O_S A = O_S P_2$$

In this process, to ease the computations, the coordinates $(x_A,y_A)$ relative to the 2D point A,$(x_1, y_1)$ relative to the 2D point $P_1$, $(x_2, y_2)$ relative to the 2D point $P_2$ are defined with $O_S$ as origin. The equation can be developed for each coordinate x and y as follows:

$$\lambda \cdot (x_2 - x_1) + \mu \cdot x_A = x_2$$

$$\lambda \cdot (y_2 - y_1) + \mu \cdot y_A = y_2$$

$\lambda$ and $\mu$ are then obtained by solving this system of two equations with two unknowns $\lambda$ and $\mu$.

This gives the real values $\mu$ and $\lambda$ and thus the projected 2D point intersection W on the determined border of the representation of the ICG in the chromaticity diagram:

$$\mu = |O_S W| / |O_S A| = ( x_2 . y_1 - y_2 . x_1 ) / ( x_A . (y_1 - y_2) - y_A . (x_1 - x_2) )$$

$$\lambda = ( x_2 - \mu . x_A ) / (x_2 - x_1) \text{ or equivalently}$$

$$\lambda = ( y_2 - \mu . y_A ) / (y_2 - y_1)$$

For the specific case where $(x_A * (y_2 - y_1) - y_A * (x_2 - x_1) )$ is stricly equal to 0, $\mu$ is set to a very high value (for instance 999999.).

A monotonic increasing function p1 (.) is then used to move the first 2D point A so that it belongs to the representation of the TCG by taking into account the 2D intersection point W.

According to a variant, the monotonic increasing function p1 (.) is defined in order that each mapped color image data corresponds to at most one color image data.

This leads to an invertible color gamut mapping, i.e. each mapped color image data corresponds to at most one color image data. This is advantageous because this ensures that the colors of the OCG (original) could be retrieved from the mapped colors.

According to an embodiment, illustrated in **Fig. 4a**, an invertible color gamut mapping is determined as follows:

Let S be a 2D point determined in the chromaticity diagram by projecting the first 2D point A on a border of the representation of the TCG along the line ($O_S W$), and P be a 2D point determined in the chromaticity diagram by projecting the first 2D point A on a border of the representation of the PCG along the line ($O_S W$).

Moving the first 2D point A so that it belongs to the representation of the TCG is then to keep the 2D point P unchanged, and to move the 2D intersection point W toward the 2D point S.

The moved first 2D point A, i.e. the 2D point B belonging to the representation of the TCG and representative of the mapped color image data in the chromaticity diagram, is thus obtained as follows when the 2D intersection point W is the reference point:

$$O_S B = O_S W . p1( |O_S A| / |O_S W| ) = O_S W . p1( 1 / \mu ) \qquad (3)$$

where the monotonic increasing function p1 (.) satisfies the following conditions:

$$O_S S = O_S W . p1( |O_S W| / |O_S W| )$$

$$O_S P = O_S W . p1( |O_S P| / |O_S W| )$$

The conditions may be equivalently expressed by:

$$p1( |O_S W| / |O_S W| ) = |O_S S| / |O_S W|$$

$$p1( |O_S P| / |O_S W| ) = |O_S P| / |O_S W|$$

or more simply by:

$$p1(1) = 1 / f_W$$

$$p1( f_P / f_W) = f_P / f_W$$

because by definition, $O_S P = f_P . O_S S$ and $O_S W = f_W . O_S S$ and equivalently $|O_S P| = f_P . |O_S S|$ and $|O_S W| = f_W . |O_S S|$

For instance, the model of the monotonic increasing function p1 (.) is given by:

$$\rho1( r ) = u.r + v$$

with $u = (1 - f_P) / (f_W - f_P)$ and $v = 1 / f_W - u$.

**Fig. 4b** depicts an example of a monotonic increasing function $\rho1(.)$

According to another example, the model of the monotonic increasing function p1(.) is given by:

$$\rho1(r) = u.\log(r) + v$$

with $u = (f_P - 1) / (f_W. \log(f_P/f_W))$ and $v = 1 / f_w$

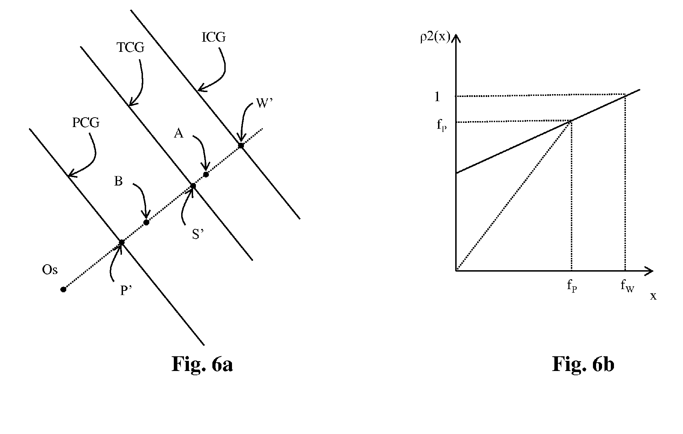

According to an embodiment of step 300, illustrated in **Figs. 6a-b**, the first 2D point A is moved (shrunk) so that it belongs to the representation of the TCG as follows:

The first 2D point A is projected onto an intersection point S' located on a border of a representation of the TCG.

According to an embodiment, an information data INFOTCG, that defines the border of representation of the TCG to be used, is obtained.

According to an embodiment, said information data INFOTCG defines the representation of TCG and the border of the representation of the TCG as follows: A border of the representation of the TCG is schematically represented by a line segment defined by two 2D points $P'_1$ and $P'_2$ representing two TCG color primaries in the chromaticity diagram. The position of the first 2D point A in the representation of the TCG in the chromaticity diagram is given by the weighted centroid definition:

$$O_SA = a'. O_SR_T + b'. O_SG_T + c'. O_SB_T \qquad \text{with } c' = 1 - a' - b'$$

where **a'**, **b'**, and **c'** are weighting parameters, $R_T(x_{RT},y_{RT})$, $G_T(X_{GT},Y_{GT})$ and $B_T(x_{BT},y_{BT})$ are the three 2D points representing the three color primaries defining the TCG in the chromaticity diagram (**Fig. 5**).

This previous equation, expressed for the 2 coordinates x and y, gives the following 2 equations:

$$(x_A - x_{Os}) = a'. (x_{RT} - x_{Os}) + b'. (x_{GT} - x_{Os}) + (1 - a' - b'). (x_{BT} - x_{Os})$$

$$(y_A - y_{Os}) = a'. (y_{RT} - y_{Os}) + b'. (y_{GT} - y_{Os}) + (1 - a' - b'). (y_{BT} - y_{Os})$$

which leads to the following system, with **a'** and **b'** and unknown parameters:

$$(x_{RT} - x_{BT}) . a' + (x_{GT} - x_{BT}) . b' = (x_A - x_{BT})$$

$$(y_{RT} - y_{BT}) . a' + (y_{GT} - y_{BT}) . b' = (y_A - y_{BT})$$

Identifying **a'** and **b'** consists in solving this system of 2 equations with 2 unknowns.

Using the white point $WP_T$ of the TCG instead of the centroid $O_S$ would just consist in replacing in those equations $O_S$ by $WP_T$.

The border of the representation of the TCG to which the 2D intersection point S' belongs is then determined according to the values of the parameters **a'**, **b'** and **c'** as follows:

- If the value of parameter **a'** is the minimum value (compared to the value of **b'** and **c'**, then the 2D intersection point S' is located on the border of the representation of the TCG defined by $P'_1=G_T$ and $P'_2=B_T$;

- If the value of parameter **b'** is the minimum value (compared to the value of **a'** and **c'**, then the 2D intersection point S' is located on the border of the representation of the TCG defined by $P'_1=R_T$ and $P'_2=B_T$;
- If the value of parameter **c'** is the minimum value (compared to the value of **a'** and **b'**, then the 2D intersection point S' is located on the border of the representation of the TCG defined by $P'_1=R_T$ and $P'_2=G_T$.

Once the border of the representation of the TCG has been determined, the position of the 2D intersection point S' on this border (defined by the points $P'_1$ and $P'_2$) that corresponds to the intersection of line $(O_SA)$ with the segment linking $P'_1$ and $P'_2$ is given by:

$$O_SS' = \lambda'. O_SP'_1 + ( 1 - \lambda') . O_SP'_2 \qquad (4)$$

where $\lambda'$ is a parameter value to be determined.

Moreover, the 2D intersection point S' belongs to the line joining the 2D point A and the centroid $O_S$, i.e.

$$O_SS' = \mu'. O_SA \qquad (5)$$

where $\mu'$ is the distance ratio (real value) to be defined that is greater than 1.

Replacing $O_SS'$ in equation (5) leads to:

$$\lambda'. O_SP'_1 + ( 1 - \lambda') . O_SP'_2 = \mu' . O_SA$$

that is

$$\lambda' . P'_1P'_2 + \mu' . O_SA = O_SP'_2$$

In this process, to ease the computations, the coordinates $(x_A,y_A)$ relative to the 2D point A, $(x_1, y_1)$ relative to the 2D point $P'_1$, $(x_2, y_2)$ relative to the 2D point $P'_2$ are defined with $O_S$ as origin. The equation can be developed for each coordinate x and y as follows:

$$\lambda' . (x_2 - x_1) + \mu' . x_A = x_2$$

$$\lambda' . (y_2 - y_1) + \mu' . y_A = y_2$$

$\lambda'$ and $\mu'$ are then obtained by solving this system of two equations with two unknowns $\lambda'$ and $\mu'$.

This gives the real values $\mu'$ and $\lambda'$ and thus the projected 2D point intersection S' on the determined border of the representation of the TCG in the chromaticity diagram:

$$\mu' = |O_SS'| / |O_SA| = ( x_2 . y_1 - y_2 . x_1) / ( x_A . (y_1 - y_2) - y_A . (x_1 - x_2) )$$

$$\lambda' = ( x_2 - \mu' . x_A ) / (x_2 - x_1) \text{ or equivalently}$$

$$\lambda' = ( y_2 - \mu' . y_A ) / (y_2 - y_1)$$

For the specific case where $(x_A * (y_2 - y_1) - y_A * (x_2 - x_1) )$ is stricly equal to 0, $\mu'$ is set to a very high value (for instance 999999.).

A monotonic increasing function p2(.) is then used to move the first 2D point A so that it belongs to the representation of the TCG by taking into account the 2D intersection point S'.

According to a variant, the monotonic increasing function p2(.) is defined in order that each mapped color image data corresponds to at most one color image data.

This leads to an invertible color gamut mapping, i.e. each mapped color image data corresponds to at most one color image data. This is advantageous because this ensures that the colors of the OCG (original) could be retrieved from the mapped colors.

According to an embodiment, illustrated in **Fig. 6a**, an invertible color gamut mapping is determined as follows:

Let W' be a 2D point determined in the chromaticity diagram by projecting the first 2D point A on a border of the representation of the ICG along the line ($O_SS$'), and P' be a 2D point determined in the chromaticity diagram by projecting the first 2D point A on a border of the representation of the PCG along the line ($O_SS$').

Moving the first 2D point A so that it belongs to the representation of the TCG is then to keep the 2D point P' unchanged, and to move the 2D point W' toward the 2D intersection point S'.

The moved first 2D point A, i.e. the 2D point B belonging to the representation of the TCG and representative of the mapped color image data in the chromaticity diagram, is thus obtained as follows when the 2D intersection point S' is the reference point:

$$O_SB = O_SS' \cdot \rho2(\ |O_SA| \ / \ |O_SS'|\ ) = O_SS' \cdot \rho2(\ 1 \ / \ \mu'\ ) \qquad (6)$$

where the monotonic increasing function p2(.) satisfies the following conditions:

$$O_SS' = O_SS' \cdot \rho2(\ |O_SW'| \ / \ |O_SS'|\ )$$

$$O_SP' = O_SS' \cdot \rho2(\ |O_SP'| \ / \ |O_SS'|\ )$$

The conditions may be equivalently expressed by:

$$\rho2(\ |O_SW'| \ / \ |O_SS'|\ ) = 1$$

$$\rho2(\ |O_SP'| \ / \ |O_SS'|\ ) = |O_SP'| \ / \ |O_SS'|$$

or more simply by:

$$\rho2(f_W) = 1$$

$$\rho2(\ f_P) = f_P$$

because by definition, $O_SP' = f_P \cdot O_SS'$ and $O_S' = f_W \cdot O_SS'$ and equivalently $|O_SP'| = f_P \cdot |O_SS'|$ and $|O_SW'| = f_W \cdot |O_SS'|$

For instance, the model of the monotonic increasing function p2(.) is given by:

$$\rho2(\ r\ ) = u'.r + v'$$

with $u' = (1 - f_P) \ / \ (f_W - f_P)$ and $v' = 1 - u' f_W$.

**Fig. b** depicts an example of a monotonic increasing function p2(.)

According to another example, the model of the monotonic increasing function p2(.) is given by:

$$\rho2(r) = u' \cdot \log(r) + v'$$

with $u' = (1 - f_P) \ / \ (\log(f_W)\_\log(\ f_P))$ and $v = 1 - u'. \log(f_W)$.

It shall be noted that in this embodiment, there is no explicit usage of the color primaries of PCG (2D points $R_P, G_P, B_P$) or ICG (2D points $R_I, G_I, B_I$). Advantageously, these color primaries do not need to be computed. Only the scaling factors $f_P$ and $f_W$ are required.

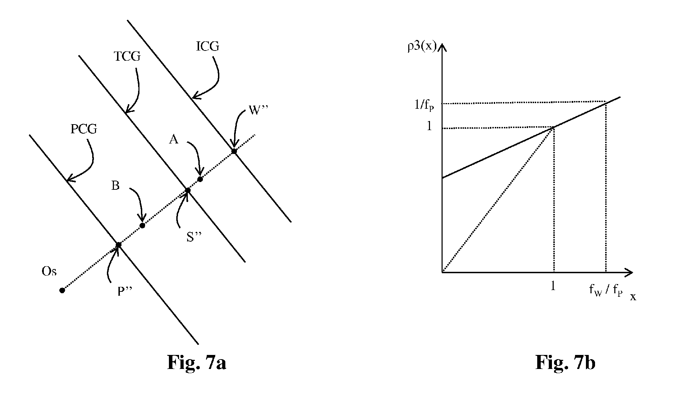

According to an embodiment of step 300, illustrated in **Figs. 7a-b**, the first 2D point A is moved (shrunk) so that it belongs to the representation of the TCG as follows:

The first 2D point A is projected onto an intersection point P" located on a border of a representation of the PCG.

A representation of the PCG in the chromaticity diagram (i.e. the color primaries $R_P$, $G_P$, $B_P$ defining the PCG in the chromaticity diagram) is (are) obtained by applying on a representation of a Target Color Gamut TCG (on the color primaries of TCG) an homothety H with the scaling factor $f_P$.

According to an embodiment, an information data INFOP CG, that defines the border of representation of the PCG to be used, is obtained.

According to an embodiment, said information data INFOPCG defines the representation of PCG and the border of the representation of the PCG as follows: A border of the representation of the PCG is schematically represented by a line segment defined by two 2D points $P"_1$ and $P"_2$ representing two PCG color primaries in the chromaticity diagram. The position of the first 2D point A in the representation of the PCG in the chromaticity diagram is given by the weighted centroid definition:

$$O_S A = a". O_S R_P + b". O_S G_P + c". O_S B_P \qquad \text{with } c" = 1 - a" - b"$$

where **a"**, **b"**, and **c"** are weighting parameters, $R_P(x_{RP}, y_{RP})$, $G_P(x_{GP}, y_{GP})$ and $B_P(x_{BP}, y_{BP})$ are the three 2D points representing the three color primaries defining the PCG in the chromaticity diagram (**Fig. 5**).

This previous equation, expressed for the 2 coordinates x and y, gives the following 2 equations:

$$(x_A - x_{Os}) = a". (x_{RP} - x_{Os}) + b". (x_{GP} - x_{Os}) + (1 - a" - b"). (x_{BP} - x_{Os})$$

$$(y_A - y_{Os}) = a". (y_{RP} - y_{Os}) + b". (y_{GP} - y_{Os}) + (1 - a" - b"). (y_{BP} - y_{Os})$$

which leads to the following system, with **a"** and **b"** and unknown parameters:

$$(x_{RP} - x_{BP}) . a" + (x_{GP} - x_{BP}) . b" = (x_A - x_{BP})$$

$$(y_{RP} - y_{BP}) . a" + (y_{GP} - y_{BP}) . b" = (y_A - y_{BP})$$

Identifying **a"** and **b"** consists in solving this system of 2 equations with 2 unknowns.

Using the white point $WP_T$ of the TCG instead of the centroid $O_S$ would just consist in replacing in those equations $O_S$ by $WP_T$.

The border of the representation of the PCG to which the 2D intersection point P" belongs is then determined according to the values of the parameters **a"**, **b"** and **c"** as follows:

- If the value of parameter **a"** is the minimum value (compared to the value of **b"** and **c"**, then the 2D intersection point P" is located on the border of the representation of the PCG defined by $P"_1=G_P$ and $P"_2=B_P$;
- If the value of parameter **b"** is the minimum value (compared to the value of **a"** and **c"**, then the 2D intersection point S' is located on the border of the representation of the TCG defined by $P'_1=R_T$ and $P'_2=B_T$;
- If the value of parameter **c"** is the minimum value (compared to the value of **a"** and **b"**, then the 2D intersection point P" is located on the border of the representation of the PCG defined by $P"_1=R_P$ and $P"_2=G_P$.

Once the border of the representation of the PCG has been determined, the position of the 2D intersection point P" on this border (defined by the points $P"_1$ and $P"_2$) that corresponds to the intersection of line $(O_S A)$ with the segment linking $P"_1$ and $P"_2$ is given by:

$$O_S P" = \lambda". O_S P"_1 + (1 - \lambda"). O_S P"_2 \qquad (7)$$

where $\lambda''$ is a parameter value to be determined.

Moreover, the 2D intersection point P'' belongs to the line joining the 2D point A and the centroid $O_S$, i.e.

$$O_SP'' = \mu''. O_SA \qquad (8)$$

where $\mu''$ is the distance ratio (real value) to be defined that is greater than 1.

Replacing $O_SP''$ in equation (8) leads to:

$$\lambda''. O_SP''_1 + ( 1 - \lambda'') . O_SP''_2 = \mu'' . O_SA$$

that is

$$\lambda'' . P''_1P''_2 + \mu'' . O_SA = O_SP''_2$$

In this process, to ease the computations, the coordinates $(x_A, y_A)$ relative to the 2D point A, $(x_1, y_1)$ relative to the 2D point P''$_1$, $(x_2, y_2)$ relative to the 2D point P''$_2$ are defined with $O_S$ as origin. The equation can be developed for each coordinate x and y as follows:

$$\lambda'' . (x_2 - x_1) + \mu'' . x_A = x_2$$

$$\lambda'' . (y_2 - y_1) + \mu'' . y_A = y_2$$

$\lambda''$ and $\mu''$ are then obtained by solving this system of two equations with two unknowns $\lambda''$ and $\mu''$.

This gives the real values $\mu''$ and $\lambda''$ and thus the projected 2D point intersection P'' on the determined border of the representation of the PCG in the chromaticity diagram:

$$\mu'' = |O_SP''| / |O_SA| = ( x_2 . y_1 - y_2 . x_1 ) / ( x_A . (y_1 - y_2) - y_A . (x_1 - x_2) )$$

$$\lambda'' = ( x_2 - \mu'' . x_A ) / (x_2 - x_1) \text{ or equivalently}$$

$$\lambda'' = ( y_2 - \mu'' . y_A ) / (y_2 - y_1)$$

For the specific case where $(x_A * (y_2 - y_1) - y_A * (x_2 - x_1) )$ is stricly equal to 0, $\mu''$ is set to a very high value (for instance 999999.).

A monotonic increasing function p3(.) is then used to move the first 2D point A so that it belongs to the representation of the TCG by taking into account the 2D intersection point P''.

According to a variant, the monotonic increasing function p3(.) is defined in order that each mapped color image data corresponds to at most one color image data.

This leads to an invertible color gamut mapping, i.e. each mapped color image data corresponds to at most one color image data. This is advantageous because this ensures that the colors of the OCG (original) could be retrieved from the mapped colors.

According to an embodiment, illustrated in **Fig. 7a**, an invertible color gamut mapping is determined as follows:

Let W'' be a 2D point determined in the chromaticity diagram by projecting the first 2D point A on a border of the representation of the ICG along the line ($O_SP''$), and S'' be a 2D point determined in the chromaticity diagram by projecting the first 2D point A on a border of the representation of the TCG along the line ($O_SP'''$).

Moving the first 2D point A so that it belongs to the representation of the TCG is then to keep the 2D intersection point P'' unchanged, and to move the 2D point W'' toward the 2D point S''.

The moved first 2D point A, i.e. the 2D point B belonging to the representation of the TCG and representative of the mapped color image data in the chromaticity diagram, is thus obtained as follows when the 2D intersection point P'' is the reference point:

$$O_SB = O_SP''. \rho3(|O_SA| / |O_SP''|) = O_SS'' . \rho3(1 / \mu'') \quad (9)$$

where the monotonic increasing function $\rho3(.)$ satisfies the following conditions:

$$O_SS'' = O_SP'' . \rho3(|O_SW''| / |O_SP''|)$$

$$O_SP'' = O_SP'' . \rho3(|O_SP''| / |O_SP''|)$$

The conditions may be equivalently expressed by:

$$\rho3(|O_SW''| / |O_SP''|) = |O_SS''| / |O_SP''|$$

$$\rho3(|O_SP''| / |O_SP''|) = 1$$

or more simply by:

$$\rho3(f_W / f_P) = 1 / f_P$$

$$\rho3(1) = 1$$

because by definition, $O_SP'' = f_P . O_SS''$ and $O_SW'' = f_W.O_SS''$ and equivalently $|O_SP''| = f_P . |O_SS''|$ and $|O_SW''| = f_W. |O_SS''|$

For instance, the model of the monotonic increasing function $\rho3(.)$ is given by:

$$\rho3(r) = u''.r + v''$$

with $u'' = (1 - f_P) / (f_W - f_P)$ and $v'' = 1 - u'' f_W$.

**Fig. 7b** depicts an example of a monotonic increasing function $\rho3(.)$

According to another example, the model of the monotonic increasing function $\rho3(.)$ is given by:

$$\rho3(r) = u'' . \log(r) + v''$$

with $u'' = (1/f_P - 1) / (\log(f_W) \_- \log(f_P))$ and $v = 1$ The scalar factors $f_P$ and $f_W$ are parameters that enable to control the color gamut mapping.

When the CIE 1931 xy chromaticity diagram is considered, a representation of the ICG in the chromaticity diagram is obtained from the representation of the TCG by:

$$O_SR_W = f_W. O_SR_T \quad O_SG_W = f_W. O_SG_T \quad O_SB_W = f_W. O_SBT$$

where $R_W$, $G_W$, and $B_W$ are three 2D points representing the three color primaries defining the ICG in the chromaticity diagram, $R_T$, $G_T$, and $B_T$ are three 2D points representing the three color primaries defining the TCG in the chromaticity diagram, $O_S$ is the center of the homothety. The process would apply similarly in any other color space such as CIE Lab (using the ab 2D coordinates system) or CIE Luv (using the uv 2D coordinates system).

According to an embodiment of the step 200, checking whether the first 2D point A is located outside the representation of the PCG in the chromaticity diagram comprises converting the three color components $(r_A,g_A,b_A)$ of the first 2D point A (expressed in a given 3D RGB color space GCG) into the 3D RGB color space of the PCG. For instance, the GCG is the BT.2020 R,G and B color space. In another example, the GCG corresponds to the OCG. If one of the converted value is negative, this indicates that first 2D point A is outside the PCG. This is processed as follows:

Four 3x3 conversion matrices are considered: the conversion matrix $M_{XYZ\text{-}to\text{-}PCG}$ for converting colors from the XYZ to PCG color space, the conversion matrix $M_{XYZ\text{-}to\text{-}GCG}$ for converting colors from the XYZ to GCG color space, the conversion matrix $M_{PCG\text{-}to\text{-}XYZ}$ for converting colors from the PCG to XYZ color space (inverse of $M_{XYZ\text{-}to\text{-}PCG}$), and the conversion matrix $M_{GCG\text{-}to\text{-}XYZ}$ for converting colors from the GCG to XYZ color space (inverse of $M_{XYZ\text{-}to\text{-}GCG}$).The matrices $M_{PCG\text{-}to\text{-}XYZ}$ and $M_{GCG\text{-}to\text{-}XYZ}$ can be derived from the color primaries and white point defining the GCG and the PCG as detailed in the well-known SMPTE RP 177-1993 recommendation. Then the matrices $M_{XYZ\text{-}to\text{-}PCG}$ and $M_{XYZ\text{-}to\text{-}GCG}$ are simply the inverse of the matrices $M_{PCG\text{-}to\text{-}XYZ}$ and $M_{GCG\text{-}to\text{-}XYZ}$.

Mathematically speaking, checking whether the first 2D point A is located outside the representation of the PCG in the chromaticity diagram may then be processed as follows.

Considering the color image data represented by the first 2D point A, is represented by three RGB coordinates $(r_A, g_A, b_A)$ in the color space of the GCG, here a 3D RGB color space. Said color image data is converted to the color space of the PCG, here a 3D RGB color space, using the conversion matrix $M_{GCG\text{-}to\text{-}PCG}$ that is a concatenation of the conversion matrices $M_{XYZ\text{-}to\text{-}PCG} \cdot M_{GCG\text{-}to\text{-}XYZ}$:

$$\begin{bmatrix} r_{AP} \\ g_{AP} \\ b_{AP} \end{bmatrix} = M_{GCG-to-PCG} \begin{bmatrix} r_A \\ g_A \\ b_A \end{bmatrix}$$

where $(r_{AP}, g_{AP}, b_{AP})$ represents the converted color image data of the PCG.

Next, if any of the coordinates $r_{AP}$, $g_{AP}$ or $b_{AP}$ is negative then the first 2D point A is considered as being outside the PCG.

If, instead of being expressed in the 3D RGB color space of the GCG, the first point A has its three coordinates $(X_A, Y_A, Z_A)$ expressed in the CIE 1931 XYZ color space, the said color image data is then converted to the PCG color space, here a RGB color space, using the conversion matrix $M_{XYZ\text{-}to\text{-}PCG}$:

$$\begin{bmatrix} r_{AP} \\ g_{AP} \\ b_{AP} \end{bmatrix} = M_{XYZ-to-PCG} \begin{bmatrix} X_A \\ Y_A \\ Z_A \end{bmatrix}$$

Then if any of the coordinates $r_{AP}$, $g_{AP}$ or $b_{AP}$ is negative then the first 2D point A is considered as being outside the PCG.

Advantageously, the scaling factor $f_W$ is chosen sufficiently big in order to ensure that the OCG is fully included the ICG (as shown in **Figs. 3, 5**).

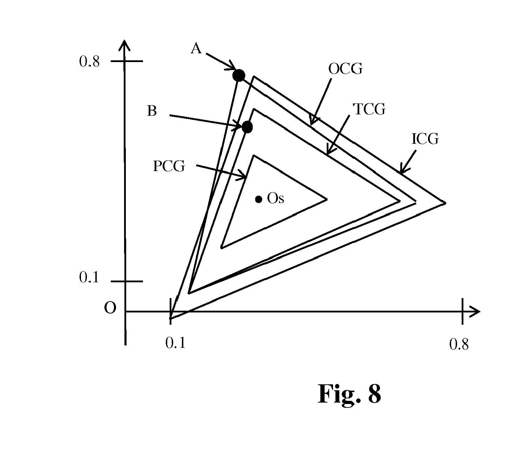

According to an embodiment, illustrated in **Fig. 8**, the colors of the OCG that do not belong to the ICG are clipped in order to belong to a border of the ICG. In other terms, when the 2D point A does not belong to the representation of the ICG, the 2D point A is forced to move on a border of the representation of the TCG in the chromaticity diagram.

Assuming the 2D point A is a vertex of the triangle representing the WCG in **Fig. 8,** is outside the triangle representing the ICG in the chromaticity diagram. Clipping the 2D point A means determining the second 2D point B as the intersection point between a line joining the first 2D point A and the centroïd of the homothety H and a border of the representation of the TCG.

According to the embodiment described in relation with **Fig. 4a-b,** the clipping of 2D point A inside the ICG but outside the OCG can be simply applied by avoiding the real values $(1/\mu)$ (that is, the ratio $|O_S A| / |O_S W|$) to be larger than 1 before applying the function p1 (.):

$$\text{If } 1/\mu > 1, \ 1/\mu \text{ is set to } 1,$$

Otherwise $1/\mu$ is not modified

Indeed, if $1/\mu = |O_S A| / |O_S W|$ is larger than 1, this means that $|O_S A|$ is larger than $|O_S W|$ so the 2D point A is above the ICG limits. Forcing $1/\mu$ to 1 clips the point A to W.

Similarly, the clipping of 2D point A inside the ICG but outside the OCG can be simply applied by avoiding the real values $1/\mu'$ (that is, the ratio $|O_S A| / |O_S S'|$) to be larger than $f_W$ before applying the function $\rho1(.)$ :

$$\text{If } 1/\mu' > f_W, \ 1/\mu' \text{ is set to } f_W,$$

Otherwise $1/\mu'$ is not modified

Indeed, if $1/\mu' = |O_SA| / |O_SS'|$ is larger than $f_W$, this means that $|O_SA|$ is larger than ( $f_W \cdot |O_SS'|$) which is equal to $|O_SW'|$ so the 2D point A is above the ICG limits. Forcing $1/\mu'$ to $f_W$ clips the point A to W'.

Similarly, the clipping of 2D point A inside the ICG but outside the OCG can be simply applied by avoiding the real values $1/\mu"$ (that is, the ratio $|O_SA| / |OsP"|$) to be larger than $f_W/f_p$ before applying the function p1 (.) :

If $1/\mu" > f_W/f_p$, $1/\mu"$ is set to $f_W/f_p$,

Otherwise $1/\mu"$ is not modified

Indeed, if $1/\mu" = |O_SA| / |O_SP"|$ is larger than $f_W/f_p$, this means that $|O_SA|$ is larger than ($f_W/f_p \cdot |O_SP"|$) which is equal to $|O_SW"|$ so the 2D point A is above the ICG limits. Forcing $1/\mu"$ to $f_W/f_p$ clips the point A to W".

According to another embodiment of the step 200, checking whether the first 2D point A is located outside the representation of the PCG in the chromaticity diagram consists in checking the value the ratio ($|OA| / |OW|$)) that is $1/\mu$, as follows:

If ($|OA| / |OW|$) <= ($|OP| / |OW|$), then the point A is inside the PCG, otherwise the point A is outside the PCG. As by definition, $|OP| / |OW| = fp/fw$, the test consists is checking if ($|OA| / |OW|$) <= fp/fw.

Similarly, the test can be done by testing the ratio ($|OA| / |OS|$), that is $1/\mu'$ as follows:

If ($|OA| / |OS|$) <= ($|OP| / |OS|$) = fp, then the point A is inside the PCG, otherwise the point A is outside the PCG.

Similarly, the test can be done by testing the ratio ($|OA| / |OP|$)), that is $1/\mu"$ as follows:

If ($|OA| / |OP|$) <= ($|OP| / |OP|$) = 1, then the point A is inside the PCG, otherwise the point A is outside the PCG.

According to another of its aspects, the disclosure further relates to an inverse color gamut mapping, i.e. the inverse of the color gamut mapping described in relation with the **Figs. 2-8**.

Thus, the method for processing color image data representing colors of a color gamut may comprises either the color gamut mapping, or the inverse color gamut mapping or both.

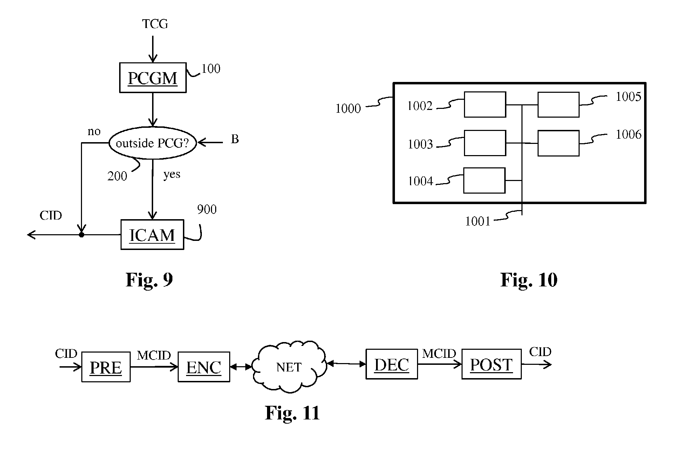

**Fig. 9** shows a block diagram of the steps of an inverse color gamut mapping in accordance with an embodiment of the disclosure.

The principle of the inverse color gamut mapping is to retrieve the first 2D point A representing the color image data CID from the second 2D point B obtained in step 300 that represents the mapped color image data. Note the first 2D point A belongs to the representation of the OCG and the second 2D point B belongs to the representation of the TCG.

In step 100, the module PCGM obtains a scaling factor $f_W$ and a scaling factor $f_p$ of an homothety, as explained above.

In step 200, the module checks whether a 2D point B is located outside the representation of the PCG as explained above.

In step 900, when the 2D point B is located outside the representation of the PCG, a module ICAM moves the 2D point B so that it belongs to the representation of an intermediate color gamut ICG.

According to a first embodiment of step 900, the second 2D point B is moved (shrunk) so that it belongs to the representation of the ICG as follows:

The second 2D point B is projected onto an intersection point W located on a border of a representation of an intermediate color gamut ICG, said ICG being defined by applying on a representation of the TCG an homothety H with a scaling factor $f_W$ strictly greater than 1.

According to an embodiment, an information data INFOICG, that defines the border of representation of the ICG to be used, is obtained.

According to an embodiment, said information data INFOICG defines the representation of ICG and the border of the representation of the ICG is defined as follows: A border of the or the representation of the ICG is schematically represented by a line segment defined by two 2D points P1 and P2 representing two color primaries in the chromaticity diagram. The position of the second 2D point B in the representation of the ICG in the chromaticity diagram is then given by:

$$O_SB = d \cdot O_SR_W + e \cdot O_SG_W + f \cdot O_SB_W \qquad \text{with } f = 1 - d - e$$

where **d, e,** and **f** are weighting parameters that can be derived by resolving this equation in the xy coordinates system. Parameters **d, e** and **f** are derived is the same way as parameters **a, b** and **c,** using equations above.

The border of the representation of the ICG to which the 2D intersection point W belongs is then determined according to the values of the parameters **d, e** and **f** as explained above.

Once the border of the representation of the ICG has been determined, the position of the 2D intersection point W on this border (defined by the points $P_1$ and $P_2$) that corresponds to the intersection of line ($O_SA$) with the segment linking $P_1$ and $P_2$ is given by:

$$O_SW = \lambda . O_SP_1 + ( 1 - \lambda ) . O_SP_2$$

where $\lambda$ is a parameter value to be determined.

This equation is actually identical to equation (1).

Moreover, the 2D intersection point W belongs to the line joining the second 2D point B and the centroid $O_S$, i.e.

$$O_SW = \mu . O_SB$$

where $\mu$ is a real value to be defined that is greater than 1.

As achieved previously, solving these two last equations allows determining the real value $\mu$ and thus the 2D intersection point W, intersection of line ($O_SA$) with the determined border of the representation of the ICG in the chromaticity diagram:

$$\mu = O_SW / O_SB = ( x_2 . y_1 - y_2 . x_1) \ / \ ( x_A . (y_1 - y_2) - y_A . (x_1 - x_2) )$$

where the coordinates B(x,y), $P_1$ $(x_1, y_1)$, $P_2$ $(x_2, y_2)$ are defined with $O_S$ as origin.

For the specific case where $(x_A * (y_2 - y_1) - y_A * (x_2 - x_1) )$ is strictly equal to 0, $\mu$ is set to a very high value (for instance 999999.).The resolution is achieved as explained above.

A monotonic increasing function $\rho1^{-1}(.)$ is used to move the second 2D point B so that it belongs to the representation of the representation of the ICG by taking into account the 2D intersection point W.

The monotonic increasing function $\rho_1^{-1}(.)$ is the inverse of the monotonic increasing function $p1(.)$

$$O_SA = O_SW . \rho_1^{-1}( |O_SB| / |O_SW| ) = O_SW . \rho_1^{-1}( 1 / \mu )$$

where the monotonic increasing function $\rho_1^{-1}(.)$ satisfies the following conditions:

$$O_SW = O_SW . \rho_1^{-1}( |O_SS| / |O_SW| )$$

$$O_SP = O_SW . \rho_1^{-1}( |O_SP| / |O_SW| )$$

The conditions may be equivalently expressed by:

$$\rho_1^{-1}( |O_SS| / |O_SW| ) = |O_SW| / |O_SW|$$

$$\rho_1^{-1}( |O_SP| / |O_SW| ) = |O_SP| / |O_SW|$$

or more simply by:

$$\rho_1^{-1}( 1 / f_W ) = 1$$

$$\rho_1^{-1}( f_P / f_W ) = f_P / f_W$$

because by definition, $O_SP = f_P \cdot O_SS$ and $OsW = f_W \cdot O_SS$ and equivalently $|O_SP| = f_P \cdot |O_SS|$ and $|O_SW| = f_W \cdot |O_SS|$

For instance, the model of the monotonic increasing function $\rho_1^{-1}(.)$ is given by:

$$\rho_1^{-1} ( r ) = u.r + v$$

with $u = (f_W - f_P) / (1 - f_P)$ and $v = 1 - u / f_W$

According to another example, the model of the monotonic increasing function $\rho_1^{-1}(.)$ is given by:

$$\rho_1^{-1}(r) = u.\log(r) + v$$

with $u = (f_W - f_P) / f_W / \log( 1 / f_P )$ and $v = 1 + u.\log( f_W )$

In this first embodiment of step 900, a 2D intersection point W positioned in a border of representation of the ICG is used to move the second 2D point B. Similarly as step 300, two other embodiments of step 900 can be defined, one using a 2D intersection point S' positioned in a border of the representation of the TCG is used to move the second 2D point B, and another one using a 2D intersection point P'' positioned in a border of a representation of the PCG is used to move the second 2D point B.

According to an embodiment, the center of the homothety is either the white point of the target color gamut (TCG) or the centroïd of the representation of the target color gamut (TCG) in the chromaticity diagram.

The gamut mapping preferably keeps the luminance Y unchanged when converting sample A to sample B: $Y_B = Y_A$. This involves the following equations:

$$X_B = x_B . Y_A / y_B$$

$$Y_B = y_B . Y_A / y_B = Y_A$$

$$Z_B = (1 - x_B - y_B). Y_A / y_B$$

Similarly, the inverse gamut mapping preferably keeps the luminance Y unchanged when back-converting sample B to sample A: $Y_A = Y_B$. This involves the following equations:

$$X_A = x_A . Y_B / y_A$$

$$Y_A = y_A . Y_B / y_A = Y_B$$

$$Z_A = (1 - x_A - y_A). Y_B / y_A$$

On **Fig. 1-9**, the modules are functional units, which may or not be in relation with distinguishable physical units. For example, these modules or some of them may be brought together in a unique component or circuit, or contribute to functionalities of a software. *A contrario,* some modules may potentially be composed of separate physical entities. The apparatus which are compatible with the disclosure are implemented using either pure hardware, for example using dedicated hardware such ASIC or FPGA or VLSI, respectively «Application Specific Integrated Circuit », « Field-Programmable Gate Array», «Very Large Scale Integration », or from several integrated electronic components embedded in a device or from a blend of hardware and software components.

**Fig. 10** represents an exemplary architecture of a device 1000 which may be configured to implement a method described in relation with **Fig. 1-9**.

Device 1000 comprises following elements that are linked together by a data and address bus 1001:

- a microprocessor 1002 (or CPU), which is, for example, a DSP (or Digital Signal Processor);
- a ROM (or Read Only Memory) 1003;
- a RAM (or Random Access Memory) 1004;
- an I/O interface 1005 for reception of data to transmit, from an application; and
- a battery 1006.

According to a variant, the battery 1006 is external to the device. Each of these elements of **Fig. 10** is well-known by those skilled in the art and won't be disclosed further. In each of mentioned memory, the word « register » used in the specification can correspond to area of small capacity (some bits) or to very large area (e.g. a whole program or large amount of received or decoded data). ROM 1003 comprises at least a program and parameters. Algorithm of the methods according to the disclosure is stored in the ROM 1003. When switched on, the CPU 1002 uploads the program in the RAM and executes the corresponding instructions.

RAM 1004 comprises, in a register, the program executed by the CPU 1002 and uploaded after switch on of the device 1000, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

**Fig. 11** shows schematically an encoding/decoding scheme in a transmission context between two remote devices A and B over a communication network NET, the device A comprises a processor in relation with memory RAM and ROM which are configured to implement a method for encoding a picture (or a sequence of picture) into a stream F and the device B comprises a processor in relation with memory RAM and ROM which are configured to implement a method for decoding a picture from a stream F.

The encoding method comprises a pre-processing module PRE configured to implement a color gamut mapping of the color image data obtained from the picture (or each picture of a sequence of picture) to be encoded. The pre-processed color image data are then encoded by the encoder ENC. Said pre-processing may thus be used to adapt an original color gamut, e.g. a wide color gamut, e.g. BT. 2020, to a target color gamut, typically a standard color gamut such as BT. 709.

The decoding method comprises a module POST configured to implement an inverse color gamut mapping of decoded color image data obtained from a decoder DEC. Said post-processing method may be used to adapt the color gamut of the decoded picture to a target color gamut, typically a wide color gamut such as BT. 2020 or any other output color gamut adapted, for example to a display.

According to a variant of the disclosure, the network is a broadcast network, adapted to broadcast still pictures or video pictures from device A to decoding devices including the device B.

According to a specific embodiment, color image data at the encoding side and decoded color image data at the decoding side, are obtained from a source. For example, the source belongs to a set comprising:

- a local memory (1003 or 1004), e.g. a video memory or a RAM (or Random Access Memory), a flash memory, a ROM (or Read Only Memory), a hard disk ;
- a storage interface (1005), e.g. an interface with a mass storage, a RAM, a flash memory, a ROM, an optical disc or a magnetic support;
- a communication interface (1005), e.g. a wireline interface (for example a bus interface, a wide area network interface, a local area network interface) or a wireless interface (such as a IEEE 802.11 interface or a Bluetooth® interface); and
- a picture capturing circuit (e.g. a sensor such as, for example, a CCD (or Charge-Coupled Device) or CMOS (or Complementary Metal-Oxide-Semiconductor)).

According to different embodiments, pre-processed or post-processed color image data are sent to a destination; specifically, the destination belongs to a set comprising:

- a local memory (1003 or 1004), e.g. a video memory or a RAM, a flash memory, a hard disk ;
- a storage interface (1005), e.g. an interface with a mass storage, a RAM, a flash memory, a ROM, an optical disc or a magnetic support;

- a communication interface (1005), e.g. a wireline interface (for example a bus interface (e.g. USB (or Universal Serial Bus)), a wide area network interface, a local area network interface, a HDMI (High Definition Multimedia Interface) interface) or a wireless interface (such as a IEEE 802.11 interface, WiFi ® or a Bluetooth ® interface); and
- a display.

According to different embodiments of encoding or encoder, the stream F is sent to a destination. As an example, one of stream F is stored in a local or remote memory, e.g. a video memory (1004) or a RAM (1004), a hard disk (1003). In a variant, the stream F is sent to a storage interface (1005), e.g. an interface with a mass storage, a flash memory, ROM, an optical disc or a magnetic support and/or transmitted over a communication interface (1005), e.g. an interface to a point to point link, a communication bus, a point to multipoint link or a broadcast network. According to different embodiments of decoding or decoder, the stream F is obtained from a source. Exemplarily, the stream F is read from a local memory, e.g. a video memory (1004), a RAM (1004), a ROM (1003), a flash memory (1003) or a hard disk (1003). In a variant, the bitstream is received from a storage interface (1005), e.g. an interface with a mass storage, a RAM, a ROM, a flash memory, an optical disc or a magnetic support and/or received from a communication interface (1005), e.g. an interface to a point to point link, a bus, a point to multipoint link or a broadcast network. According to different embodiments, device 1000, being configured to implement an encoding method as described above, belongs to a set comprising:

- a mobile device ;
- a communication device ;
- a game device ;
- a tablet (or tablet computer) ;
- a laptop ;
- a still picture camera;
- a video camera;
- an encoding chip;
- a still picture server; and
- a video server (e.g. a broadcast server, a video-on-demand server or a web server).

According to different embodiments, device 1000, being configured to implement a decoding method as described above, belongs to a set comprising:

- a mobile device ;
- a communication device ;
- a game device ;
- a set top box;
- a TV set;
- a tablet (or tablet computer) ;
- a laptop ;
- a display and
- a decoding chip.

The above method for processing color image data may be useful in an encoding/decoding scheme because a single stream may be generated at the encoding side for carrying a TCG version of a OCG picture and both the TCG and OCG version of said picture may be decoded and display according to the capabilities of the decoding.

As explained before, a PCG is chosen to preserve some original colors of the TCG. For instance setting $f_P$ to 0.9 enables to preserve the colors in 90% of the TCG. Alternatively, if maintaining the colors of the mapped picture (that is the picture resulting from the color gamut mapping) is not essential, the PCG is chosen to limit the effects of rounding involved in the gamut mapping (if the process involves integer-based computations instead of float-point based computations). For instance setting $f_P$ to a value close to 0.1 enables to get a higher precision in the gamut mapping and in its inverse process. An end-user may choose such PCG or the selection of the color primaries of the PCG may be deduced from studies of the human visual system.

Multiple PCG may be defined according to different targeted applications. For example it would be adapted to preserve some part of the wide color gamut when the mapped image color data are displayed on some specific display and it would be better to preserve some other parts of this wide color gamut when the mapped image data are displayed on display having different behavior.

In a transmission context as illustrated for example in Fig. 11, the inverse color gamut mapping is used at the decoding side. As described above, some embodiments of this method requires some parameters such as the scaling factors $f_P$ and $f_W$, and, potentially, an information data about the model of the monotonic increasing function to be used. Moreover, the inverse color gamut mapping requires also how the TCG, ICG, PCG have been defined at the encoding side. Such an information data (INFOICG, INFOTCG, INFOPCG).

All these parameters and information data may be stored locally by the decoding device or signaled in a stream, for example the stream F, (embedded as metadata for example), in order to control the behavior of the inverse color gamut mapping at the decoding side.

According to an embodiment, those parameters are signaled either in an auxiliary stream such as a SEI message as defined by the HEVC standard (B. Bross, W. J. Han, J. R. Ohm, G. J. Sullivan, Y. K. Wang, T. Wiegand, "High Efficiency Video Coding (HEVC) text specification draft 10 (for FDIS & Last Call)," JCTVC-L1003, 12th JCT-VC meeting, Geneva, Jan. 2013) or embedded in a syntax element of a main stream such as Sequence Parameter Set (SPS), Picture Parameter Set (PPS) or slice header as defined in the HEVC standard.

According to an embodiment, when the PCG parameters (INFOPCG) consist in three color primaries and a white point, that have to be inside the representation of the TCG in the chromaticity diagram, the following syntax is used:

- preserved_color_gamut_primaries_x[i], i=0 to 2
- preserved_color_gamut_primaries_y[i], i=0 to 2
- preserved_color_gamut_white_point_x
- preserved-color-gamut-white_point_y

where 'x' and 'y' indicate the two coordinates of the 2D point in chromaticity diagram.

According to an embodiment, these points are specified in the CIE Lab color space.

According to another embodiment, the white point of the PCG is the same as the white point of the TCG.

According to another embodiment, the three color primaries of the PCG are defined from the three color primaries of the TCG and white point, using ratio factors ratio_i smaller than one. For a given TCG color primary SCPi (i=0 to 2) and from the TCG white point SWP, the corresponding PCG color primary PCPi is built such that:

- PCPi_x - SWP_x = ratio_i * (SCPi_x - SWP_x)
- PCPi_y - SWP_y = ratio_i * (SCPi_y - SWP_y)

The three ratio factors have to be signaled as metadata parameters. They can be constrained to be identical. In such a case only one ratio value has to be coded.

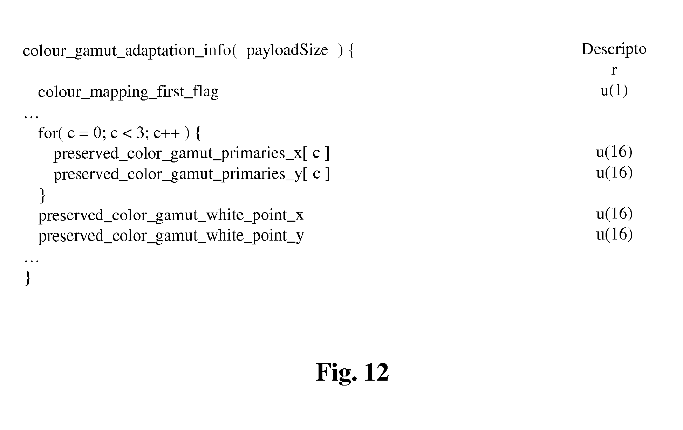

**Fig. 12** shows an example of SEI message syntax that can be conveyed as metadata with a stream and that embeds parameters useful at the decoder side to perform the method for processing color image data and more precisely to perform the inverse color gamut mapping. The corresponding semantics is the following:

- **colour_mapping_first_flag** specifies the order of the color mapping and dynamic range mapping operations for a current layer. When colour_mapping_first_flag is equal to 1, the color mapping applies before a dynamic range mapping. Otherwise the dynamic range mapping applies before the color mapping.
- **preserved_color_gamut_primaries_x**[c] and **preserved_color_gamut_primaries_y**[c] specify the normalized x and y chromaticity coordinates, respectively, of the colour primary component c of the preserved color gamut in increments of 0.00002, according to the CIE 1931 definition of x and y as specified in ISO 11664-1 (see also ISO 11664-3 and CIE 15). It is suggested that index value c equal to 0 should correspond to the green primary, c equal to 1 should correspond to the blue primary, and c equal to 2 should correspond to the red colour primary. The values of preserved_color_gamut_primaries_x[c] and preserved_color_gamut_primaries_y[c] shall be in the range of 0 to 50 000, inclusive.
- **preserved_color_gamut white_point**_x and **preserved_color_gamut_white_point_y** specify the normalized x and y chromaticity coordinates, respectively, of the white point of the preserved color gamut in normalized increments of 0.00002, according to the CIE 1931 definition of x and y as specified in ISO 11664-1 (see also ISO 11664-3 and CIE 15). The values of preserved_color_gamut_white_point_x and preserved_color_gamut_white_point_y shall be in the range of 0 to 50 000.

Implementations of the various processes and features described herein may be embodied in a variety of different equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and any other device for processing a picture or a video or other communication devices. As should be clear, the equipment may be mobile and even installed in a mobile vehicle.

Additionally, the methods may be implemented by instructions being performed by a processor, and such instructions (and/or data values produced by an implementation) may be stored on a computer readable storage medium. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method for processing color image data (CID) representing colors of an original color gamut (OCG), **characterized in that** the method comprises a color gamut mapping in the course of which each of the color image data (CID), represented by a first 2D point (A) belonging to a representation of the original color gamut in a chromaticity diagram, is mapped to a mapped color image data (MCID) of a target color gamut (TCG), the mapped color image data of the target color gamut (TCG) being represented by a second 2D point (B) belonging to a representation of the target color gamut (TCG) in the chromaticity diagram, wherein the color gamut mapping comprises:

   - obtaining (100) a first scaling factor ($f_W$) and a second scaling factor ($f_p$) of an homothety, said first scaling factor ($f_W$) being greater than one and being used to define a representation of an intermediate color gamut (ICG) in the chromaticity diagram by applying the homothety from the representation of the target color gamut (TCG), said second scaling factor ($f_P$) being lower than one and being used to define a representation of a preserved color gamut (PCG) in the chromaticity diagram by applying the homothety the representation of the target color gamut (TCG);
   - when said first 2D point is located outside the representation of the preserved color gamut (PCG), moving (300) said first 2D point so that it belongs to the representation of the target color gamut (TCG), the second 2D point being then equal to the moved first 2D point.

2. The method of claim 1, wherein the center of the homothety is either the white point of the target color gamut (TCG) or the centroïd of the representation of the target color gamut (TCG) in the chromaticity diagram.

3. The method of one of the claims 1-2, wherein moving (300) a first 2D point so that it belongs to the representation of the target color gamut (TCG) uses a monotonic increasing function.

4. The method of claim 3, wherein the monotonic increasing function is defined in order that each mapped color image data corresponds to at most one color image data.

5. The method of the claim 4, wherein the second 2D point (B) is obtained as follows:

$$O_SB / O_SW = \rho1(O_SA / O_SW)$$

where B is the second 2D point, W is a 2D point obtained by projecting said first 2D point on a border of the representation of the intermediate color gamut (ICG) in the chromaticity diagram, $f_W$ being the first scaling factor, and $\rho1(.)$ the monotonic increasing function satisfying the following conditions:

$$\rho1(1) = 1 / f_W$$

$$\rho1( f_P / f_W) = f_P / f_W$$

where $f_p$ is the second scaling factor.

6. The method of the claim 4, wherein the second 2D point (B) is obtained as follows:

$$O_SB / O_SS' = \rho2(O_SA / O_SS')$$

where B is the second 2D point and p2(.) the monotonic increasing function satisfying the following conditions:

$$\rho2(f_W) = 1$$

$$\rho2( f_P) = f_P$$

where $f_p$ is the second scaling factor and $f_W$ is the first scaling factor.

7. The method of the claim 4, wherein the second 2D point (B) is obtained as follows:

$$O_SB / O_SP'' = \rho3(O_SA / O_SP'')$$

where B is the second 2D point and p3(.) the monotonic increasing function satisfying the following conditions:

$$\rho3(f_W / f_P) = 1 / f_P$$

$$\rho3(1) = 1$$

where $f_p$ is the second scaling factor and $f_W$ is the first scaling factor.

8. The method of claim 5, 6 or 7, wherein the colors of the color gamut (OCG) that do not belong to the representation of the intermediate color gamut (ICG) are clipped in order to belong to a border of the representation of the target color gamut (ICG).

9. The method of one of the claims 1-8, wherein the monotonic increasing function is signalled by an information data in a stream.

10. A method for processing color image data representing colors of an original color gamut (OCG), **characterized in that** said method comprises an inverse color gamut mapping in the course of which mapped color image data, represented by a second 2D point (B) belonging to a representation of a target color gamut (TCG) in a chromaticity diagram, is inverse mapped to said color image data (CID), the inverse mapped color data of the original color gamut being represented by a first 2D point (A) belonging to a representation of the original color gamut (OCG) in the chromaticity diagram, wherein said inverse color gamut mapping comprises:

- obtaining (100) a first scaling factor ($f_W$) and a second scaling factor ($f_p$) of an homothety, said first scaling factor ($f_W$) being greater than one and being used to define a representation of an intermediate color gamut (ICG) in the chromaticity diagram by applying the homothety from the representation of the target color gamut (TCG), said second scaling factor ($f_P$) being lower than one and being used to define a representation of a preserved color gamut (PCG) in the chromaticity diagram by applying the homothety the representation of the target color gamut (TCG);
- when said second 2D point is located outside the representation of the preserved color gamut (PCG) in the chromaticity diagram, moving (900) said second 2D point so that it belongs to the representation of the intermediate color gamut (ICG).

11. The method of claim 10, wherein the center of the homothety is either the white point of the target color gamut (TCG) or the centroïd of the representation of the target color gamut (TCG) in the chromaticity diagram.

12. The method of one of the claims 10-11, wherein moving (900) a second 2D point so that it belongs to the representation of the intermediate color gamut (ICG) uses a monotonic increasing function.

13. The method of one of the claims 12, wherein the monotonic increasing function is signalled by an information data in a stream.

14. A device for processing color image data (CID) representing colors of an original color gamut (OCG), **characterized in that** it comprises a processor configured to implement a color gamut mapping in the course of which each of the color image data (CID), represented by a first 2D point (A) belonging to a representation of the original color gamut in a chromaticity diagram, is mapped to a mapped color image data (MCID) of a target color gamut (TCG), the mapped color image data of the target color gamut (TCG) being represented by a second 2D point (B) belonging to a representation of the target color gamut (TCG) in the chromaticity diagram, wherein the color gamut mapping comprises:

- obtaining a first scaling factor ($f_W$) and a second scaling factor ($f_p$) of an homothety, said first scaling factor ($f_W$) being greater than one and being used to define a representation of an intermediate color gamut (ICG) in the chromaticity diagram by applying the homothety from the representation of the target color gamut (TCG), said second scaling factor ($f_P$) being lower than one and being used to define a representation of a preserved color gamut (PCG) in the chromaticity diagram by applying the homothety the representation of the target color gamut (TCG);
- when said first 2D point is located outside the representation of the preserved color gamut (PCG), moving said first 2D point so that it belongs to the representation of the target color gamut (TCG), the second 2D point being then equal to the moved first 2D point.

15. A device for processing color image data representing colors of an original color gamut (OCG), **characterized in that** it comprises a processor configured to implement an inverse color gamut mapping in the course of which mapped color image data, represented by a second 2D point (B) belonging to a representation of a target color gamut (TCG) in a chromaticity diagram, is inverse mapped to said color image data (CID), the inverse mapped color data of the original color gamut being represented by a first 2D point (A) belonging to a representation of the original color gamut (OCG) in the chromaticity diagram, wherein said inverse color gamut mapping comprises:

- obtaining (a first scaling factor ($f_W$) and a second scaling factor ($f_p$) of an homothety, said first scaling factor ($f_W$) being greater than one and being used to define a representation of an intermediate color gamut (ICG) in the chromaticity diagram by applying the homothety from the representation of the target color gamut (TCG), said second scaling factor ($f_P$) being lower than one and being used to define a representation of a preserved color gamut (PCG) in the chromaticity diagram by applying the homothety the representation of the target color gamut (TCG);- when said second 2D point is located outside the representation of the preserved color gamut (PCG) in the chromaticity diagram, moving said second 2D point so that it belongs to the representation of the intermediate color gamut (ICG)..

16. A method for encoding color image data, **characterized in that** the color image data are pre-processed according to a method of one of the claims 1-9.

17. A method for decoding color image data, **characterized in that** the decoded color image data are post-processed according to a method of one of the claims 10-13.

18. A device for encoding color image data, **characterized in that** it comprises a processor configured to implement a method of one of the claims 1-9 to pre-process the color image data before encoding.

19. A device for decoding color image data, **characterized in that** it comprises a processor configured to implement a method of one of the claims 10-13 to post-process the decoded color image data.

20. A computer program product comprising program code instructions to execute the steps of the method according to the claim 1, 10, 16 or 17 when this program is executed on a computer.

21. A processor readable medium having stored therein instructions for causing a processor to perform at least the steps of the method according to the claim 1, 10, 16 or 17.

22. Non-transitory storage medium carrying instructions of program code for executing steps of method according to the claim 1, 10, 16 or 17 when said program is executed on a computing device.

**Fig. 1**

TCG

<u>PCGM</u> ⟍100

CID → ( outside PCG? ) no

200 ⌣ yes

300 ⌣ <u>CAM</u> → MCID

**Fig. 2**

y

$G_T$

TCG

$G_P$

A

PCG

B

OCG

Os

$R_T$

$R_P$

$B_T$

$B_P$

O

x

**Fig. 3**

**Fig. 4a**

**Fig. 4b**

Fig. 5

**Fig. 6a**

**Fig. 6b**

**Fig. 7a**

**Fig. 7b**

Fig. 8

TCG

PCGM ⌐ 100

no ← outside PCG? ← B

200 ⌐ yes

CID

900

← ● ICAM ⌐

**Fig. 9**

1000 ⌐ 1002 ⌐ [ ] [ ] ⌐ 1005

1003 ⌐ [ ] [ ] ⌐ 1006

1004 ⌐ [ ]

1001 ⌐

**Fig. 10**

CID → PRE → MCID → ENC ↔ NET ↔ DEC → MCID → POST → CID

**Fig. 11**

```
colour_gamut_adaptation_info( payloadSize ) {                    Descripto
                                                                    r
    colour_mapping_first_flag                                      u(1)
  ...
    for( c = 0; c < 3; c++ ) {
      preserved_color_gamut_primaries_x[ c ]                       u(16)
      preserved_color_gamut_primaries_y[ c ]                       u(16)
    }
    preserved_color_gamut_white_point_x                            u(16)
    preserved_color_gamut_white_point_y                            u(16)
  ...
}
```

# Fig. 12

Europäisches
Patentamt

European
Patent Office

Office européen
des brevets

## EUROPEAN SEARCH REPORT

Application Number

EP 15 30 5743

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/128835 A1 (YAO MENG [US]) 21 May 2009 (2009-05-21)<br><br>* abstract; figure all *<br>* paragraphs [0040] - [0044], [0047], [0050], [0051] * | 1-3, 8-17, 20-22 | INV. H04N1/60 |
| X | US 2011/249016 A1 (ZHANG XIAOMANG [JP] ET AL) 13 October 2011 (2011-10-13)<br>* abstract; figure all * | 2,3,8,9, 11-13 | |
| X | WO 2007/024503 A1 (EASTMAN KODAK CO [US]; MADDEN THOMAS ETHAN [US]; KOWARZ MAREK WLODZIMI) 1 March 2007 (2007-03-01)<br>* abstract; claim 4; figure all * | 3,12 | |
| X | EP 1 986 417 A1 (SAMSUNG ELECTRONICS CO LTD [KR]) 29 October 2008 (2008-10-29)<br>* abstract; figure all *<br>* paragraphs [0074], [0075] * | 8 | |

TECHNICAL FIELDS
SEARCHED      (IPC)

H04N

The present search report has been drawn up for all claims

| Place of search | Date of completion of the search | Examiner |
|---|---|---|
| The Hague | 27 August 2015 | Winne, Dominique |

EPO FORM 1503 03.82 (P04C01)

**EP 3 096 510 A1**

## ANNEX TO THE EUROPEAN SEARCH REPORT
## ON EUROPEAN PATENT APPLICATION NO.

EP 15 30 5743

This annex lists the patent family members relating to the patent documents cited in the above-mentioned European search report.
The members are as contained in the European Patent Office EDP file on
The European Patent Office is in no way liable for these particulars which are merely given for the purpose of information.

27-08-2015

| Patent document cited in search report | | | Publication date | Patent family member(s) | | | Publication date |
|---|---|---|---|---|---|---|---|
| US 2009128835 | A1 | | 21-05-2009 | NONE | | | |
| US 2011249016 | A1 | | 13-10-2011 | CN | 102292991 | A | 21-12-2011 |
| | | | | US | 2011249016 | A1 | 13-10-2011 |
| | | | | WO | 2010131500 | A1 | 18-11-2010 |
| WO 2007024503 | A1 | | 01-03-2007 | CN | 101248677 | A | 20-08-2008 |
| | | | | EP | 1917815 | A1 | 07-05-2008 |
| | | | | JP | 2009506358 | A | 12-02-2009 |
| | | | | KR | 20080037046 | A | 29-04-2008 |
| | | | | US | 2007046690 | A1 | 01-03-2007 |
| | | | | WO | 2007024503 | A1 | 01-03-2007 |
| EP 1986417 | A1 | | 29-10-2008 | CN | 101296383 | A | 29-10-2008 |
| | | | | EP | 1986417 | A1 | 29-10-2008 |
| | | | | JP | 2008278465 | A | 13-11-2008 |
| | | | | KR | 20080095671 | A | 29-10-2008 |
| | | | | US | 2008266315 | A1 | 30-10-2008 |
| | | | | WO | 2008133391 | A1 | 06-11-2008 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. PEDZISZ.** Beyond BT.709. *SMPTE Motion Imaging Journal,* 2014, vol. 123 (8), 18-25